# EUROPÄISCHE PATENTSCHRIFT

(11) **EP 4 446 535 B1**
(45) Veröffentlichungstag und Bekanntmachung des Hinweises auf die Patenterteilung: **14.01.2026**
(21) Anmeldenummer: 24164096.0
(22) Anmeldetag: 18.03.2024
(51) Int. Cl.: E05C 9/02, E05C 9/18, E05B 63/00, E05B 77/08, E05B 77/34, E05B 83/02, E05C 9/00, E05C 9/22

(54) **INTEGRIERTE SEITLICHE ABDICHT- UND VERRIEGELUNGSVORRICHTUNG**
INTEGRATED LATERAL SEALING AND LOCKING DEVICE
DISPOSITIF INTÉGRÉ D'ÉTANCHÉITÉ LATÉRALE ET DE VERROUILLAGE

(30) Priorität: 13.04.2023 DE 202023101876 U
(43) Veröffentlichungstag der Anmeldung: 16.10.2024
(73) Patentinhaber: Bode - Die Tür GmbH, 34123 Kassel (DE)
(72) Erfinder: Pellegrini, Andreas, 34295 Edermünde (DE); Linnenkohl, Lars, 34355 Staufenberg (DE); Arend, Ulrich, 34576 Dickershausen (DE); Thöne, Chris, 34123 Kassel (DE); Theis, Christoph, 34537 Bad Wildungen (DE); Rasekhi Coochesfahani, Diako, 34128 Kassel (DE)
(74) Vertreter: Patentanwälte Bauer Vorberg Kayser

(56) Entgegenhaltungen:
- EP-A2- 1 607 299
- AT-B- 406 361
- CN-A- 111 206 855

## Beschreibung

Die vorliegende Erfindung betrifft eine Abdicht- und Verriegelungsvorrichtung für Türen von Fahrzeugen des öffentlichen Personenverkehrs, die mindestens ein in einem Türportal angeordnetes Türblatt aufweisen.

Türen von Fahrzeugen des öffentlichen Personenverkehrs sind in der Regel über Abdichtelemente abgedichtet, die umlaufend um die Türöffnung und/oder am Rand des Türblatts angeordnet sind. Weiterhin weisen solche Türen auch Verriegelungsvorrichtungen auf, die die Tür in geschlossener Verriegelungsposition gegen unbeabsichtigtes Öffnen sichern. Eine solche Abdicht- und Verriegelungsvorrichtung ist z. B. im Dokument EP1607299 offenbart.

Auch derartige Verriegelungseinrichtungen sind an sich hinlänglich bekannt. Sie weisen im Allgemeinen ein oder mehrere Verriegelungselemente auf, die am Türblatt und/oder am Türportal angeordnet sind und mit entsprechenden Gegenelementen am Türportal oder am Türblatt zusammenwirken. Es ist auch bekannt, derartige Verriegelungseinrichtungen elektrisch oder pneumatisch von einer zentralen Steuereinrichtung her anzusteuern. Die Verriegelung von Nebenschließkanten von ein- oder zweiflügeligen Schwenkschiebetüren erfolgt dabei beispielsweise über Drehsäulen, verriegelbare Schwenkarme, Drehfallenverriegelungen oder Schlösser. Dies ist insbesondere bei kastenförmigen Fahrzeugen mit relativ geraden Türportalen technisch relativ einfach, bei gewölbt ausgebildeten Türblättern, ist dagegen meist jede Verriegelungsvorrichtung mit einer eigenen ansteuerbaren Betätigungsvorrichtung versehen. Dies ist sowohl für die Fertigung, als auch die Wartung und Instandhaltung nachteilig.

Ein weiterer Nachteil besteht darin, dass bei Verriegelungsvorrichtungen nach dem Stand der Technik die für die Verriegelung notwendigen Verriegelungsmittel oftmals nach innen in die Türöffnung hineinragen. Bekannt sind beispielsweise Bolzen, in die eine am Türblatt angeordnete Drehfalle hineinfährt. Diese vorstehenden Verriegelungsmittel stellen eine Verletzungsgefahr für Passagiere dar und sind oftmals auch verschmutzt, wodurch Kleidung von Passagieren in Mitleidenschaft gezogen werden kann.

Der Erfindung liegt die Aufgabe zugrunde, eine zum Stand der Technik alternative Verriegelungseinrichtung vorzuschlagen. Diese soll ermöglichen, dass mittels einer einzigen Betätigungs- bzw. Antriebsvorrichtung auch bei gewölbtem Türblatt ein oder mehrere das Türblatt mit dem Türportal verriegelnde Verriegelungseinrichtungen verriegelt werden können. Weiterhin soll die Verletzungsgefahr für Passagiere möglichst gering sein. Die Verriegelungseinrichtung soll dabei einfach aufgebaut und kostengünstig herstellbar sein.

Die Lösung dieser Aufgabe erfolgt erfindungsgemäß durch eine Abdicht- und Verriegelungsvorrichtung mit den Merkmalen des Patentanspruchs 1. Vorteilhafte Weiterbildungen der Erfindung sind in den abhängigen Ansprüchen beschrieben.

Demnach ist die erfindungsgemäße Abdicht- und Verriegelungsvorrichtung ausgebildet mit
einem Abdichtelement, das
- an zumindest einer der im geschlossenen Zustand der Tür einander gegenüberliegenden Schließkante des Türportals und des Türblatts angeordnet und am Fahrzeugportal fixiert ist,
- eine Verriegelungseinheit aufweist, die mit einem ortsfest am Türblatt angeordneten Verriegelungsmittel zusammenwirkt,
- innenliegend ein entlang der Schließkante des Türportals verlaufendes und translatorisch in Längsrichtung bewegbares Bandelement aufweist, welches die Verriegelungseinheit mit einer Antriebseinheit für die Bewegung des Bandelements verbindet, und einer Verriegelungseinheit, die
- einen Schieber aufweist, der fest mit dem Bandelement verbunden und von diesem translatorisch in eine Verriegelungsposition, in der der Schieber das am Türblatt angeordnete Verriegelungsmittel und damit das Türblatt blockiert und eine Offenposition, in der das am Türblatt angeordnete Verriegelungsmittel ungehindert in einer Öffnungsrichtung des Türblatts bewegbar ist, verschiebbar ist,
- ein im Wesentlichen geschlossenes Gehäuse aufweist, in dem der Schieber bewegbar gelagert ist und das eine Banddurchgangsöffnung für das Bandelement sowie eine Verrieglungsmittelöffnung zum Herein- und Herausbewegen des Verrieglungsmittels aufweist.

Die Erfindung kombiniert die beiden bei Fahrzeugtüren ohnehin vorhandenen Vorrichtungen, nämlich dass Abdichtelement und die Verriegelungseinheit in besonders vorteilhafter Weise.

Das erfindungsgemäße Abdichtelement beinhaltet zumindest an einer Seite des Türportals ein Bandelement, welches die ebenfalls am Türportal angeordnete Verriegelungseinheit mit einer Antriebseinheit verbindet. Die Antriebseinheit bewegt das Bandelement translatorisch in Längsrichtung entlang der Seitenkante des Türportals. Durch die Bewegung des Bandelements wird in der Verriegelungseinheit ein Schieber ebenfalls entlang der Längsrichtung der Türportalkante bewegt und kann somit von einer Verriegelungsposition in eine Offenposition verfahren werden. In der Verriegelungsposition befindet sich der Schieber in Öffnungsrichtung des Türblatts vor einem am Türblatt fest angeordneten Verriegelungsmittel, beispielsweise einem Bolzen oder Haken, der dadurch gehalten und blockiert wird. Zum Öffnen der Tür bzw. zum Bewegen des Türblatts wird der Schieber mithilfe der Antriebseinheit außer Eingriff mit dem Verriegelungsmittel gebracht.

Der Schieber ist in einem im Wesentlichen geschlossenen Gehäuse angeordnet, wodurch Passagieren mit diesem nicht in Kontakt kommen können. Auch das Bandelement ist innerhalb des Abdichtelements geführt, wodurch ebenfalls ein Kontakt mit Passagieren ausgeschlossen ist.

Vorzugsweise ist das Abdichtelement entlang einer Seitenkante des Türportals, vorzugsweise entlang einer Nebenschließkante, angeordnet. In einer besonders vorteilhaften Ausführungsvariante bildet das Abdichtelement einen umlaufenden Abdichtrahmen für das Türportal aus. In diesem ist zumindest an einer Seite das translatorisch verschiebbare Bandelement gelagert, es kann aber auch an mehreren Seiten vorgesehen sein.

Das Abdichtelement kann vorzugsweise ein Abdeckelement aufweisen, welches das Bandelement abdeckt. Das Bandelement ist dann also zwischen dem fahrzeugseitigen Türportal und dem Abdeckelement angeordnet.

Das Bandelement, welches vorzugsweise aus einem dünnen Stahlblech gebildet ist, kann auch einer gewölbten Kontur eines Türportals folgen und ist somit auch für Fahrzeuge mit gewölbten Fahrzeugwänden oder -türen geeignet. Besonders vorteilhaft ist auch, dass nicht nur eine, sondern auch mehrere Verriegelungseinheiten vorgesehen sein können, die jeweils über ein Bandelement miteinander verbunden sind und somit durch eine einzige Antriebseinheit gleichzeitig betätigt werden können. Es kann auch nur ein einziges Bandelement vorgesehen sein, an dem mehrere Verriegelungseinheiten befestigt sind.

Die Verriegelungseinheit weist erfindungsgemäß ein im Wesentlichen geschlossenes Gehäuse auf, in das das Bandelement durch eine Banddurchgangsöffnung hineingeführt und mit dem darin beweglich gelagerten Schieber verbunden ist. Das Gehäuse ist innenseitig derart ausgeführt, dass der Schieber in Längsrichtung geführt ist und seitliche Bewegungen dagegen ausgeschlossen sind.

In einer besonders vorteilhaften Ausführungsvariante ragt das Gehäuse der Verriegelungseinheit mit einem Türblattkontaktbereich bereichsweise nach innen in die Öffnung des Türportals hinein. Wird das Türblatt geschlossen, kommt es mit dem Türblattkontaktbereich in Kontakt und liegt an diesem an.

Das Gehäuse weist im vorstehenden Türblattkontaktbereich die Verriegelungsmittelöffnung zur Aufnahme des am Türblatt angeordneten Verriegelungsmittels auf. Wird also das Türblatt von der geöffneten Position in die geschlossene Position bewegt, fährt das Verriegelungsmittel, vorzugsweise ausgeführt als Verriegelungshaken, in die Verriegelungsmittelöffnung des Gehäuses ein. Der im Gehäuse angeordnete Schieber verriegelt anschließend durch seine Längsbewegung das Verrieglungsmittel im Gehäuse.

Der vorzugsweise im Wesentlichen rechteckig ausgeführte Schieber weist in seinem Randbereich eine Ausnehmung auf, die mit der Verriegelungsmittelöffnung in Deckung bringbar ist. Befindet sich die Aufnahme mit der Verriegelungsmittelöffnung in Deckung, kann das Verriegelungsmittel bzw. kann der Verriegelungshaken durch die Verriegelungsmittelöffnung und die Aufnahme geführt werden. An die Aufnahme schließt sich am Schieber vorzugsweise ein Einlaufkeil an, der gegen das Verriegelungsmittel bewegt und in eine verriegelte Endposition bringbar ist. Dadurch wird das Türblatt in Richtung des Abdichtelements, also in Richtung des Türportals gedrückt, was eine zufriedenstellende Abdichtung gewährleistet.

Der Schieber besteht vorzugsweise aus einem gleitfähigen Material, vorzugsweise Kunststoff. Dieses weist einen sehr niedrigen Reibungskoeffizienten auf, sodass eine gute Gleitfähigkeit gewährleistet ist. Der Einlaufkeil kann dagegen aus einem verschleißarmen bzw. widerstandsfähigen Material, beispielsweise aus Stahl gefertigt sein, um ein dauerhaftes und zuverlässiges Funktionieren der Verriegelungsvorrichtung zu gewährleisten.

Das Gehäuse der Verriegelungseinheit ist mit dem Türportal über geeignete Verbindungsmittel verbunden, vorzugsweise mit diesen verschraubt. Der Schieber ist wiederum mit dem Bandelement verbunden, auch hierfür bietet sich eine Schraubverbindung an. Denkbar ist aber auch jede andere geeignete Art der Verbindung.

Das am Türportal angeordnete Verriegelungsmittel ist wie oben beschrieben vorzugsweise hakenförmig als Verriegelungshaken ausgeführt, sodass der Schieber zwischen das Türblatt und den vorstehenden Verriegelungshaken einführbar ist.

Sowohl im offenen als auch im geschlossenen Zustand der Tür oder des Türblatts stehen außer dem Türblattkontaktbereich keine weiteren Elemente ins Innere des Fahrzeugs vor, wodurch eine Verletzung-, oder Verschmutzungsgefahr für Passagiere weitgehend ausgeschlossen ist.

Die Erfindung wird anhand der nachfolgenden Figuren näher erläutert. Diese zeigen eine bevorzugte Ausführungsvariante der Erfindung, auch andere Formen und Abmessungen sind denkbar. Insbesondere kann es auch vorteilhaft sein, wenn die erfindungsgemäße Abdicht- und Verriegelungsvorrichtung am Türblatt und das entsprechende Verriegelungsmittel dagegen am Türportal angeordnet sind.

Es zeigen:
- Figur 1:: einen Abschnitt einer erfindungsgemäßen Abdicht- und Verriegelungsvorrichtung mit einem Abdichtelement und einer Verriegelungseinheit,
- Figur 2:: die erfindungsgemäße Abdichtvorrichtung im Schnitt A -A in Fig. 1,
- Figur 3:: eine teilweise geöffnete Verriegelungseinheit in Offenposition,
- Figur 4:: die teilweise geöffnete Verriegelungseinheit aus Figur 3 in Verriegelungsposition.

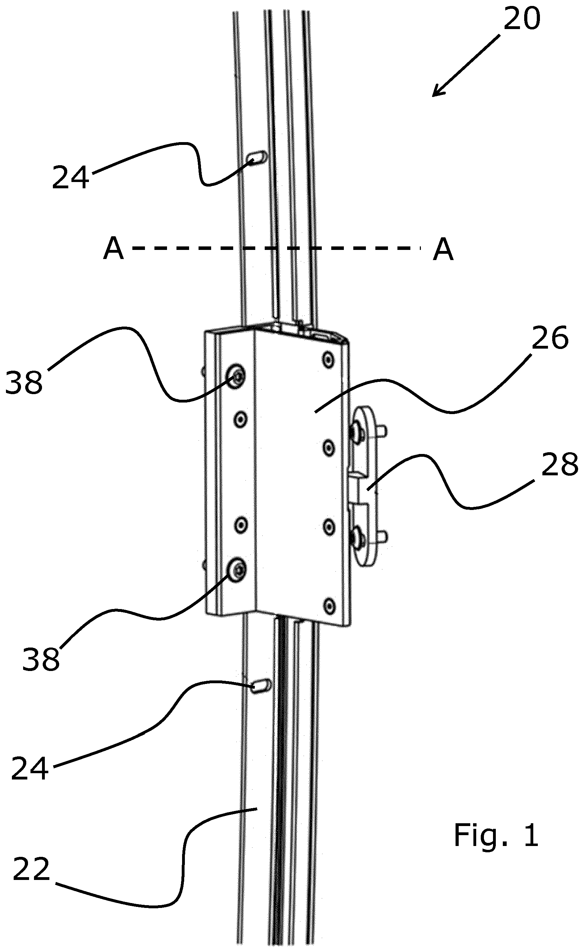

Figur 1 zeigt eine erfindungsgemäße Abdicht- und Verriegelungsvorrichtung 20. Gezeigt ist ein Abdichtelement 22, das über die Bohrungen 24 an einem nicht gezeigten Fahrzeugportal befestigbar ist. Die Abdicht- und Verriegelungsvorrichtung 20 weist weiterhin eine Verriegelungseinheit 26 auf, die in das Abdichtelement 22 integriert ist. Die Verriegelungseinheit 26 wirkt mit einem ortsfest an einem nicht gezeigten Türblatt angeordneten Verriegelungsmittel 28 zusammen.

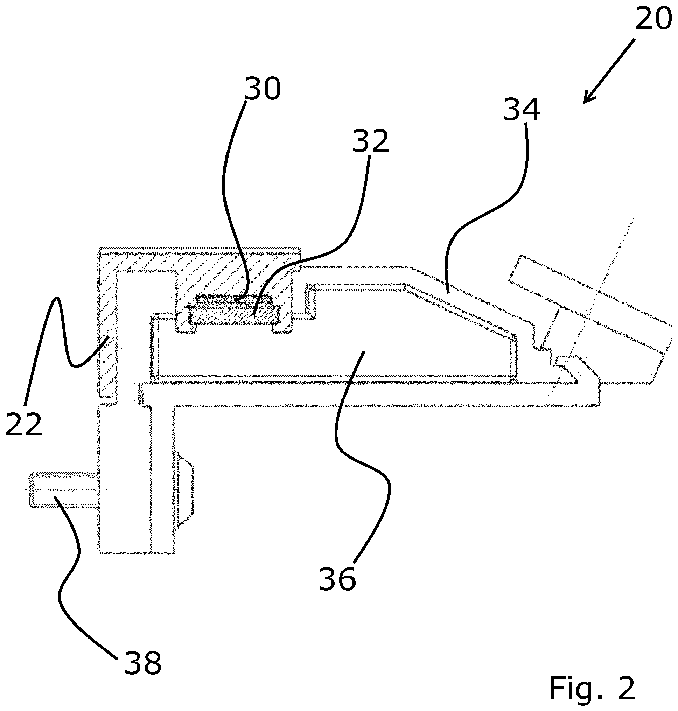

Figur 2 zeigt einen Schnitt durch den Abdichtrahmen 1 entlang der Schnittlinie A-A in Figur 1. Darin translatorisch gelagert ist ein Bandelement 30, welches bevorzugt aus dünnem Stahlblech besteht, um unterschiedlichen Fahrzeugkonturen folgen zu können. Zur Abdeckung und Führung des Bandelements 30 ist ein Abdeckelement 32 in das Abdichtelement 22 eingeschoben.

Die Verriegelungseinheit 26 weist ein Gehäuse 34 auf, in welchem ein Schieber 36 angeordnet ist, der über das durch eine nicht gezeigte Antriebseinheit angetriebene Bandelement 30 translatorisch verschiebbar ist. Das Gehäuse 34 ist über Schrauben 38 mit dem nicht gezeigten Türportal verbunden.

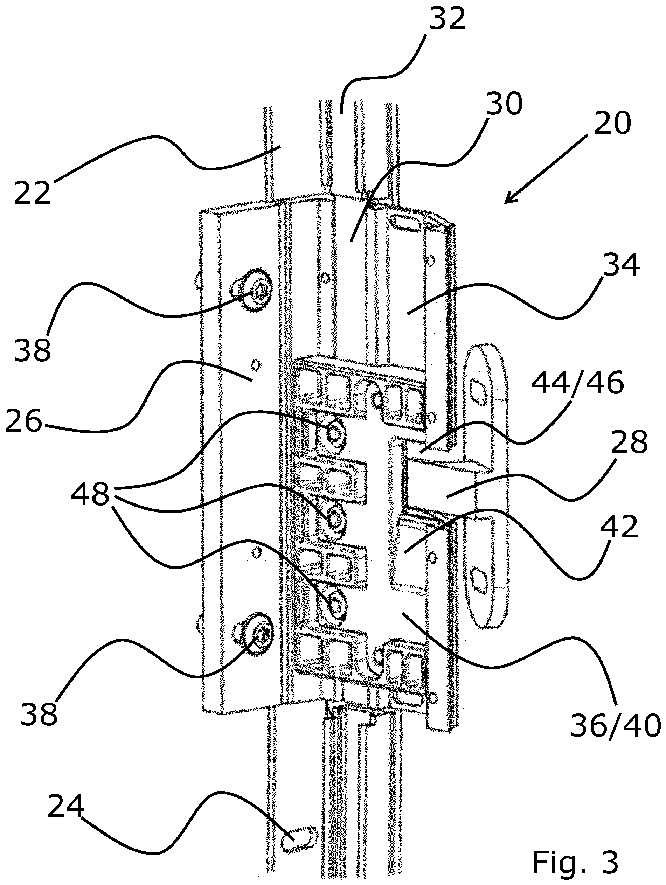

Figur 3 zeigt die Verriegelungseinheit 26 in geöffnetem Zustand. Im Gehäuse 34 ist der translatorisch verschiebbare Schieber 36 erkennbar. Der Schieber 36 besteht im gezeigten Ausführungsbeispiel aus einem Gleitelement 40 in welches ein Einlaufkeil 42 integriert ist. Der Einlaufkeil 42 schließt sich an eine Ausnehmung 44 an, die sich in der gezeigten Offenposition mit einer Verriegelungsmittelöffnung 46 im Gehäuse 34 in Deckung befindet, sodass das Verriegelungsmittel 28 in das Gehäuse 34 einführbar ist. In der gezeigten Position ist das Verriegelungsmittel 28 nicht mit dem Schieber 36 in Eingriff, die Tür kann sich damit in eine geöffnete Position bewegen.

Der Schieber 36 ist im gezeigten Ausführungsbeispiel über Verschraubungen 48 mit dem Bandelement 30 verbunden. Die translatorische Verschiebung des Bandelementes 30 und damit des Schiebers erfolgt über eine nicht gezeigte Anbindung an den Türantrieb oder über einen elektrischen, hydraulischen oder pneumatischen Aktuator.

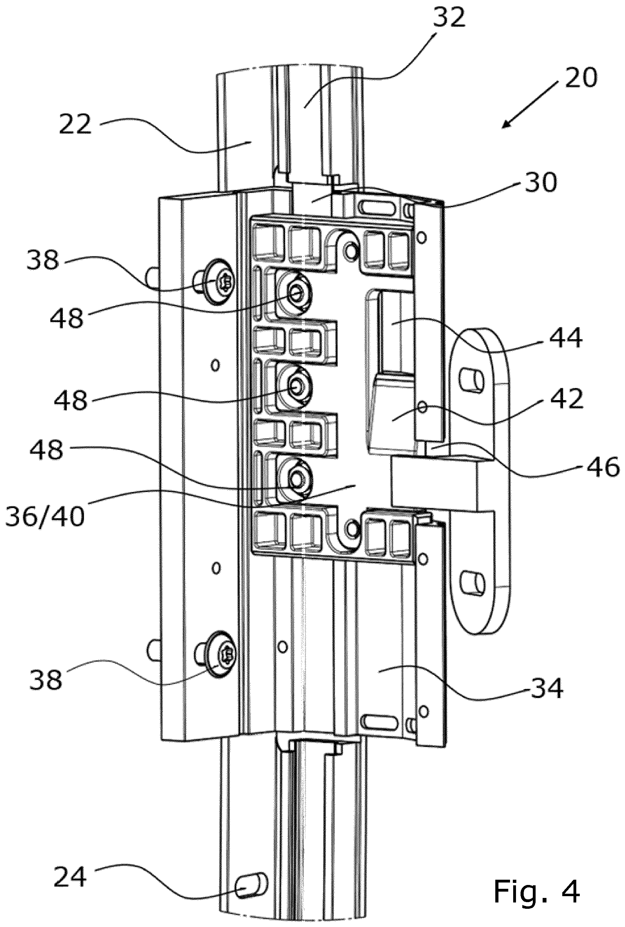

Figur 4 zeigt die verriegelte Position der Verriegelungseinheit 26. Der Schieber 36 befindet sich nach einer Bewegung entlang der Längsachse des Abdichtelements 22 in Eingriff mit dem Verriegelungsmittel 28 des Türblatts. Da das Verriegelungsmittel im gezeigten Ausführungsbeispiel als Verriegelungshaken ausgeführt ist, befindet sich der Schieber 36 zwischen dem Verriegelungshaken und dem Türblatt und blockiert somit die Öffnung des Türblatts in Öffnungsrichtung.

Der neben der Ausnehmung 44 bzw. daran anschließende Einlaufkeil 42 bewirkt bei dessen Bewegung zwischen den Verriegelungshaken und dem Türblatt ein Andrücken des Türblatts gegen das Türportal und damit gegen das Abdichtelement 22, wodurch eine erhöhte Dichtwirkung erreicht wird.

## Patentansprüche

1. Abdicht- und Verriegelungsvorrichtung (20) für Türen von Fahrzeugen des öffentlichen Personenverkehrs, die mindestens ein in einem Türportal angeordnetes Türblatt aufweisen, mit
einem Abdichtelement (22), das
- an zumindest einer der im geschlossenen Zustand der Tür einander gegenüberliegenden Schließkanten des Türportals (XY) und des Türblatts angeordnet und am Fahrzeugportal fixiert ist,
- eine Verriegelungseinheit (26) aufweist, die mit einem ortsfest am Türblatt angeordneten Verriegelungsmittel (28) zusammenwirkt,
- innenliegend ein entlang der Schließkante des Türportals verlaufendes und translatorisch in Längsrichtung bewegbares Bandelement aufweist, welches die Verriegelungseinheit (26) mit einer Antriebseinheit für die Bewegung des Bandelements verbindet,
und einer Verriegelungseinheit (26), die
- einen Schieber (36) aufweist, der fest mit dem Bandelement verbunden und von diesem translatorisch in eine Verriegelungsposition, in der der Schieber (36) das am Türblatt angeordnete Verriegelungsmittel (28) und damit das Türblatt blockiert und eine Offenposition, in der das am Türblatt angeordnete Verriegelungsmittel (28) ungehindert in einer Öffnungsrichtung des Türblatts bewegbar ist, verschiebbar ist,
**dadurch gekennzeichnet, dass** die Verriegelungseinheit:
- ein im Wesentlichen geschlossenes Gehäuse (34) aufweist, in dem der Schieber (36) bewegbar gelagert ist und das eine Banddurchgangsöffnung für das Bandelement sowie eine Verrieglungsmittelöffnung zum Herein- und Herausbewegen des Verrieglungsmittels (28) aufweist.

2. Abdicht- und Verriegelungsvorrichtung (20) nach Anspruch 1, **dadurch gekennzeichnet, dass** im Gehäuse (34) Führungsmittel zur Führung des Schiebers (36) vorgesehen sind.

3. Abdicht- und Verriegelungsvorrichtung (20) nach Anspruch 1 oder Anspruch 2, **dadurch gekennzeichnet, dass** das Verriegelungsmittel (28) als Verriegelungshaken ausgeführt ist und der Schieber (36) einen Einlaufkeil (42) aufweist, der beim Verfahren von der Offenposition in die Verriegelungsposition in Öffnungsrichtung des Türblatts vor den im Gehäuse (34) angeordneten Verriegelungshaken verfahrbar ist.

4. Abdicht- und Verriegelungsvorrichtung (20) nach einem der Ansprüche 1 bis 3, **dadurch gekennzeichnet, dass** das Gehäuse (34) einen Türblattkontaktbereich aufweist, der zumindest bereichsweise seitlich in eine Türöffnung hineinragt und die Verriegelungsmittelöffnung (46) zur Aufnahme des Verriegelungsmittels (28) aufweist.

5. Abdicht- und Verriegelungsvorrichtung (20) nach einem der Ansprüche 1 bis 4, **dadurch gekennzeichnet, dass** der Schieber (36) eine rechteckige Grundform mit einer an einer Seite angeordneten Ausnehmung (44) aufweist, wobei die Ausnehmung (44) mit der Verriegelungsmittelöffnung (46) in Deckung bringbar ist.

6. Abdicht- und Verriegelungsvorrichtung (20) nach Anspruch 5, **dadurch gekennzeichnet, dass** sich der Einlaufkeil (42) an die Ausnehmung (44) anschließt und während der Bewegung des Schiebers (36) von der Offenposition in die Verriegelungsposition in Öffnungsrichtung des Türblatts hinter das Verriegelungsmittel (28) bringbar ist.

7. Abdicht- und Verriegelungsvorrichtung (20) nach Anspruch 6, **dadurch gekennzeichnet, dass** der Einlaufkeil (42) während der Bewegung des Schiebers (36) von der Offenposition in die Verriegelungsposition ein Anpressen des Türblatts an das Abdichtelement (22) bewirkt.

8. Abdicht- und Verriegelungsvorrichtung (20) nach Anspruch 6 oder Anspruch 7, **dadurch gekennzeichnet, dass** der Schieber (36) aus einem gleitfähigen Material mit niedrigem Reibkoeffizienten und der Einlaufkeil (42) aus einem Material gebildet ist, das eine höhere Verschleißfestigkeit als das Material des Schiebers (36) aufweist.

9. Abdicht- und Verriegelungsvorrichtung (20) nach einem der Ansprüche 1 bis 8, **dadurch gekennzeichnet, dass** eine zweite Verriegelungseinheit (26) vorgesehen ist, wobei die erste Verriegelungseinheit (26) und die zweite Verriegelungseinheit (26) über ein Bandelement miteinander verbunden sind.

10. Abdicht- und Verriegelungsvorrichtung (20) nach einem der Ansprüche 1 bis 9, **dadurch gekennzeichnet, dass** das Bandelement durch ein Stahlband gebildet ist.

11. Abdicht- und Verriegelungsvorrichtung (20) nach einem der Ansprüche 1 bis 10, **dadurch gekennzeichnet, dass** das Abdichtelement (22) ein Abdeckelement (32) aufweist, welches das Bandelement im Abdichtelement (22) abdeckt und führt.

## Claims

1. A sealing and locking device (20) for doors of public transport vehicles, which have at least one door leaf arranged in a door portal, with
a sealing element (22), which
- is arranged on at least one of the closing edges of the door portal (XY) and of the door leaf lying opposite one another in the closed state of the door and which is fixed to the vehicle portal,
- has a locking unit (26), which cooperates with a locking means (28), which is arranged on the door leaf in a stationary manner,
- internally has a strip element, which runs along the closing edge of the door portal and which can be moved in a translatory manner in the longitudinal direction, and which connects the locking unit (26) to a drive unit for the movement of the strip element,
and a locking unit (26), which
- has a slider (36), which is firmly connected to the strip element and is displaceable by the latter in a translatory manner into a locking position, in which the slider (36) blocks the locking means (28) arranged on the door leaf and thus blocks the door leaf, and an open position, in which the locking means (28) arranged on the door leaf can be moved unhindered in an opening direction of the door leaf,
**characterized in that** the locking unit:
- has a substantially closed housing (34), in which the slider (36) is movably mounted and which has a strip passage opening for the strip element as well as a locking means opening for moving the locking means (28) in and out.

2. The sealing and locking device (20) according to Claim 1, **characterized in that** guide means are provided in the housing (34) for guiding the slider (36).

3. The sealing and locking device (20) according to Claim 1 or Claim 2, **characterized in that** the locking means (28) is embodied as a locking hook, and the slider (36) has an inlet wedge (42) which can be moved in front of the locking hook arranged in the housing (34) on moving from the open position into the locking position in the opening direction of the door leaf.

4. The sealing and locking device (20) according to one of Claims 1 to 3, **characterized in that** the housing (34) has a door leaf contact region, which protrudes laterally into a door opening at least partially and has the locking means opening (46) for receiving the locking means (28).

5. The sealing and locking device (20) according to one of Claims 1 to 4, **characterized in that** the slider (36) has a rectangular basic form with a recess (44) arranged on one side, wherein the recess (44) can be brought in alignment with the locking means opening (46).

6. The sealing and locking device (20) according to Claim 5, **characterized in that** the inlet wedge (42) adjoins the recess (44) and can be brought behind the locking means (28) during the movement of the slider (36) from the open position into the locking position in the opening direction of the door leaf.

7. The sealing and locking device (20) according to Claim 6, **characterized in that** the inlet wedge (42) brings about a pressing of the door leaf against the sealing element (22) during the movement of the slider (36) from the open position into the locking position.

8. The sealing and locking device (20) according to Claim 6 or Claim 7, **characterized in that** the slider (36) is formed from a slidable material with a low friction coefficient, and the inlet wedge (42) is formed from a material which has a higher wear resistance than the material of the slider (36).

9. The sealing and locking device (20) according to one of Claims 1 to 8, **characterized in that** a second locking unit (26) is provided, wherein the first locking unit (26) and the second locking unit (26) are connected to one another via a strip element.

10. The sealing and locking device (20) according to one of Claims 1 to 9, **characterized in that** the strip element is formed by a steel strip.

11. The sealing and locking device (20) according to one of Claims 1 to 10, **characterized in that** the sealing element (22) has a cover element (32), which covers and guides the strip element in the sealing element (22).

## Revendications

1. Dispositif d'étanchéité et de verrouillage (20) pour portes de véhicules de transport en commun, qui présentent au moins un vantail disposé dans un cadre de porte, comportant
un élément d'étanchéité (22), qui
- est disposé sur au moins un des bords de fermeture du cadre de porte (XY) et du vantail, opposés l'un à l'autre lorsque la porte est fermée et est fixé au cadre de porte du véhicule,
- présente une unité de verrouillage (26), qui coopère avec un moyen de verrouillage (28) disposé fixement sur le vantail,
- présente une charnière interne longeant le bord de fermeture du cadre de porte et mobile en translation longitudinale, qui relie l'unité de verrouillage (26) à une unité d'entraînement pour le déplacement de la charnière et
une unité de verrouillage (26) qui
- présente un coulisseau (36) solidaire de la charnière et mobile en translation par cette dernière, passant d'une position de verrouillage dans laquelle le coulisseau (36) bloque le moyen de verrouillage (28) disposé sur le vantail et donc le vantail lui-même, à une position ouverte dans laquelle le moyen de verrouillage (28) disposé sur le vantail est librement mobile dans une direction d'ouverture du vantail,
**caractérisé en ce que** l'unité de verrouillage :
- présente un boîtier (34) sensiblement fermé, dans lequel le coulisseau (36) est monté de manière mobile et qui présente une ouverture de passage de charnière pour l'élément de charnière ainsi qu'une ouverture de moyen de verrouillage permettant l'entrée et la sortie du moyen de verrouillage (28).

2. Dispositif d'étanchéité et de verrouillage (20) selon la revendication 1, **caractérisé en ce que** des moyens de guidage pour le guidage du coulisseau (36) sont prévus dans le boîtier (34).

3. Dispositif d'étanchéité et de verrouillage (20) selon la revendication 1 ou la revendication 2, **caractérisé en ce que** le moyen de verrouillage (28) est conçu comme un crochet de verrouillage et le coulisseau (36) présente une cale de guidage (42) qui, lors du passage de la position ouverte à la position de verrouillage, peut être déplacée devant les crochets de verrouillage disposés dans le boîtier (34) dans la direction d'ouverture du vantail.

4. Dispositif d'étanchéité et de verrouillage (20) selon une des revendications 1 à 3, **caractérisé en ce que** le boîtier (34) présente une zone de contact avec le vantail qui, au moins partiellement, dépasse en saillie latéralement dans une ouverture de porte et présente l'ouverture de moyen de verrouillage (46) destinée à recevoir le moyen de verrouillage (28).

5. Dispositif d'étanchéité et de verrouillage (20) selon une des revendications 1 à 4, **caractérisé en ce que** le coulisseau (36) présente une forme de base rectangulaire avec un évidement (44) ménagé sur un côté, dans lequel l'évidement (44) peut être aligné avec l'ouverture de moyen de verrouillage (46) dans le couvercle.

6. Dispositif d'étanchéité et de verrouillage (20) selon la revendication 5, **caractérisé en ce que** la cale de guidage (42) est adjacente à l'évidement (44) et peut être amenée derrière le moyen de verrouillage (28) lors du déplacement du coulisseau (36) de la position ouverte à la position de verrouillage dans la direction d'ouverture du vantail.

7. Dispositif d'étanchéité et de verrouillage (20) selon la revendication 6, **caractérisé en ce que** la cale de guidage (42) force le vantail à appuyer contre l'élément d'étanchéité (22) lors du déplacement du coulisseau (36) de la position ouverte à la position de verrouillage.

8. Dispositif d'étanchéité et de verrouillage (20) selon la revendication 6 ou 7, **caractérisé en ce que** le coulisseau (36) est constitué d'un matériau lubrifiant à faible coefficient de frottement et la cale de guidage (42) est constituée d'un matériau, qui présente une plus grande résistance à l'usure que le matériau du coulisseau (36).

9. Dispositif d'étanchéité et de verrouillage (20) selon une des revendications 1 à 8, **caractérisé en ce qu'**une deuxième unité de verrouillage (26) est prévue, dans lequel la première unité de verrouillage (26) et la deuxième unité de verrouillage (26) sont reliées l'une à l'autre par une charnière.

10. Dispositif d'étanchéité et de verrouillage (20) selon une des revendications 1 à 9, **caractérisé en ce que** la charnière est constituée d'une bande d'acier.

11. Dispositif d'étanchéité et de verrouillage (20) selon une des revendications 1 à 10, **caractérisé en ce que** l'élément d'étanchéité (22) présente un élément de recouvrement (32), qui recouvre et guide la charnière dans l'élément d'étanchéité (22).
